# EUROPEAN PATENT APPLICATION

(11) **EP 3 193 063 A1**
(43) Date of publication of application: **19.07.2017**
(21) Application number: 16151414.6
(22) Date of filing: 15.01.2016
(51) Int. Cl.: F16K 41/04, F16J 15/06, F16K 3/26, F16K 3/34, F24D 19/10, F16K 27/00

(54) **VALVE ARRANGEMENT**

(71) Applicant: Danfoss A/S, 6430 Nordborg (DK)
(72) Inventor: Clausen, Anders Østergaard, 8680 Ry (DK); Nielsen, Peter Gammeljord, 7100 Vejle (DK)
(74) Representative: Knoblauch, Andreas

(57) **Abstract**

The present invention relates to a valve arrangement (1) comprising a first port (2), a second port (3), a valve seat (4) being arranged in a fluid flow path connecting the inlet (2) and the outlet (3), and a valve seat support (5) supporting the valve seat (4). According to the invention, the valve arrangement (1) comprises a cup (6), the cup (6) radially surrounding the valve seat support (5) or the valve seat support (5) radially surrounding the cup (6), the cup (6) throttling a fluid flow along the fluid flow path. This allows for easy throttling of the fluid flow passing through the valve arrangement (1).

## Description

The present invention relates to a valve arrangement comprising a first port, a second port, a valve seat being arranged in a flow path between the first port and the second port, and a valve seat support supporting the valve seat.

It is desirable for some valve arrangements to have an exact throttling of the valve, thus a good control of the amount of fluid flow passing from the first port to the second port. One solution is to control and adjust a movement of a valve element. For example, the movement may be performed stepwise or linear in order to come to a stepwise or linear change of fluid flow through the valve element, respectively. However, controlling and adjusting the movement of the valve element exactly may involve quite some mechanical effort and thus can be complicated.

The object of the invention is therefore to provide a valve arrangement that allows for easy throttling.

The object of the invention is solved by the valve arrangement as described in the outset in that the valve arrangement comprises a cup, the cup radially surrounding the valve seat support or the valve seat support radially surrounding the cup, the cup throttling a fluid flow along the fluid flow path.

Such a cup adapted to throttle the fluid flow allows easy throttling as throttling of the valve arrangement may be performed without, for example, having a non-linear movement speed of the valve element. Since the cup can be used to control the flow, it can be termed "flow regulation cup".

It is preferred that the cup is adjusted to the form of the valve seat support. Thus, it is preferred that both the cup and the valve seat support have the same circumferential shape so as to regulation cup is therefore coaxially surrounding the valve seat support or the valve seat support is coaxially surrounding the cup. A radial distance between the cup and the valve seat support can be predetermined in order to influence throttling behavior.

It is preferred that the valve seat support is of a cylindrical shape and the cup is of a corresponding cylindrical shape. Preferably, both the valve seat support and the cup are of a circular cylindrical shape. However, in some embodiments both shapes can be a rectangular prism or an n-sided prism, with preferably n = 5, n = 6 or n = 8. Having corresponding shapes allows compact construction and good throttling. Preferably, the cylindrical shape of the cup has an open end radially surrounding the valve seat support and a closed end sealing the cup against leakage.

Preferably, sealing means are arranged between the valve seat support and the cup. The sealing means, e.g. an O-ring can improve tightness of the valve arrangement, preferably in the closed state. The O-ring in some embodiments is mounted to the cup and radially surrounding the cup while in other embodiments it is mounted to the valve seat support and radially surrounding the valve seat support. In some embodiments the O-ring is arranged to cooperate with the valve seat so as to shut down the fluid flow completely in the closed state of the valve arrangement. Thus, the O-ring may serve as the valve element or it may support the function of the valve element.

In a preferred embodiment the cup houses a valve element cooperating with the valve seat. The valve element in such an embodiment can be arranged to cooperate with the valve seat so as to shut off the fluid flow in the closed state of the valve arrangement. Preferably, the cup radially surrounds the valve element. The valve element is preferably a rubber element.

It is preferred that the cup is moveable together with a valve spindle in order to throttle the fluid flow. Preferably, the cup is mounted to the valve spindle. It is also preferred that the valve element is mounted to the valve spindle. Even more preferably, one end of the valve spindle is accommodated in the closed end of the cup. Thus, the closed end may comprise a spindle opening. However, when the spindle is mounted in the spindle opening, the closed end can maintain its function to prevent leaking of fluid out of the closed end of the cup. Preferably, this is reached by using an adhesive or a silicon to fill any remaining spaces around the valve spindle in the spindle opening. In a most preferred embodiment to have the valve element interposed between the closed end of the cup and the valve seat.

It is preferred that the cup comprises a circumferential wall or the valve seat support comprises a circumferential wall, the circumferential wall comprising one or more throttle openings for throttling the fluid flow, the fluid flow being adjustable by moving the cup with respect to the valve seat support. In some embodiments, both the cup and the valve seat support comprise circumferential walls each. Then, according to embodiments of the invention, each circumferential wall may comprise one or more throttle openings for throttling the fluid flow. Having throttle openings allows providing a variety of throttling behaviors by using basically the same type of cup just with different throttle openings, depending on the type of valve arrangement and desired throttling behavior. Moving the cup translationally may easily be effected in embodiments in which the cup is mounted to the valve spindle. A translational movement of the cup will affect the flow cross section of the throttle opening as more or less of its cross section will be uncovered, depending on the position of the cup with respect to the valve seat support. Thus, less or more fluid may pass through the throttle opening from the first port to the second port.

It is preferred that two of the throttle openings each are arranged in opposing pairs. Opposing pairs allow symmetric production of the cup or the valve seat support. For example, the cup may be cast or molded in two identical halves being then fixed together during the production process in order to form the cup.

Preferably, the throttle openings have different shapes. This may allow for a very exact flow control in the low flow area while allowing a boost function once the valve is fully open. Preferably, each throttle opening has a shape different from all other throttle openings. However, in some embodiments some or all throttle openings may be of the same shape.

Preferably, at least one throttle opening has a shape allowing a linear throttling of the fluid flow. Linear throttling can be very easy this way as the throttle openings may be designed in view of the translational movement behavior of the cup. Thus, even if, for example, the movement speed of the cup with respect to the valve seat support is not linear, the design of the throttle opening may allow for a linear throttling none the less.

It is preferred that at least one of the throttle openings has a shape allowing a progressive and/or degressive throttling of the fluid flow. Having a progressive and/or degressive throttling can be very easy this way as the throttle openings may be designed in view of the translational movement behavior of the cup. Thus, even if, for example, the movement speed of the cup is not progressive and/or degressive along the valve seat support, the design of the throttle openings may allow for a progressive and/or degressive throttling.

It is preferred that at least one of the throttle openings has a circumferential width progressively changing with respect to an axial direction of the circumferential wall. Having such a design, the throttle opening will provide a non-linear changing flow cross section depending of the translational position. Thus, in the flow changes non-linear with a linear monotonous translation of the cup. Therefore, the flow may change in a nonlinear way.

Preferably, there are at least two throttle openings, the throttle openings having different flow cross sections with respect to each other. This design of the throttle openings may be advantageous in the low flow area or for a boosting function. It can also be useful when a stepwise throttling is to be implemented. Then, for example, one throttle opening may have a smaller flow cross section than a second throttle opening. This will allow a first amount of flow through one of the throttle openings in a first translational position and a comparably larger amount of flow through the other throttle opening in another translational position of the cup.

It is preferred that there are at least two throttle openings, the throttle openings being arranged serially one after another with respect to an axial direction of the circumferential wall. This embodiment is most preferred for establishing a stepwise flow control. In a most preferred embodiment, there are three pairs of opposing throttle openings arranged serially one after another with respect to the axial extension of the circumferential wall. Thus, the valve arrangement may be opened or closed easily in three consecutive steps. A pilot valve for otherwise opening the main valve sometimes used in previous solutions may thus be omitted. This can allow to reduce production costs of the valve arrangement.

It is preferred that the cup comprises a plastic material. This allows easy casting or molding of the cup. Preferably, the cup is made of a plastic material. Then the cup will not act as a galvanizing element in the valve arrangement and thus the durability of the valve arrangement may increase. Furthermore, elements comprising or made of plastic are available at low prices thus allowing for lowering the production costs of the valve arrangement. Expensive machining costs can be avoided.

Preferred embodiments of the invention will now be described in more detail with reference to the drawings, wherein:
- Fig. 1: shows a cross section of a first embodiment of the valve arrangement according to the invention;
- Fig. 2: shows a perspective cross section of the embodiment according to Fig. 1;
- Fig. 3: shows a cup of the first embodiment of the invention;
- Fig. 4: shows a cup of a second embodiment of the invention;
- Fig. 5: shows a cup of a third embodiment of the invention;
- Fig. 6a and 6b: show a first translational position of the cup and a second translational position of the cup, respectively;
- Fig. 7: shows a fourth embodiment of the valve arrangement;
- Fig. 8: shows a fifth embodiment of the valve arrangement; and
- Fig. 9: shows a sixth embodiment of the valve arranement.

The reference signs in the following detailed description of embodiments and the patent claims are introduced in order to improve readability only and are in no way meant to be limiting.

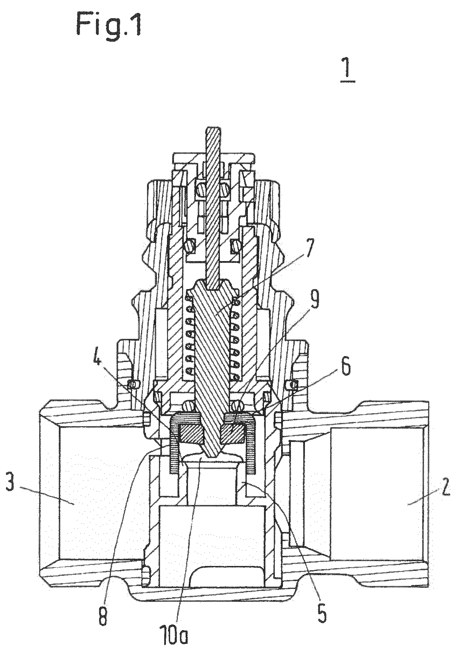

Fig. 1 shows a valve arrangement 1 according to a first embodiment of the invention. The valve arrangement 1 comprises a first port 2 and a second port 3. A fluid flow path connects the first port 2 to the second port 3. A valve seat 4 is arranged in the fluid flow path. The valve seat 4 is supported by a valve seat support 5. The first port 2 can be used as inlet and the second port 3 can be used as outlet or vice versa.

According to the invention, the valve arrangement 1 comprises a cup 6, the cup 6 radially surrounding the valve seat support 5, the cup 6 throttling a fluid flow along the fluid flow path. This allows for easy throttling of the fluid flow.

As can be seen in Fig. 1, the cup 6 is adjusted to the form of the valve seat support 5. The valve seat support 5 is of a cylindrical shape and the cup 6 is of a corresponding cylindrical shape. In the present embodiment, both are of a circular cylindrical shape. The cup 6 is attached to a valve spindle 7. The cup 6 comprises a circumferential wall 8. The circumferential wall 8 radially surrounds a valve element 9. The valve element 9 is made of rubber and cooperates with the valve seat 4 in order to shut off the fluid flow along the fluid flow path when the valve arrangement 1 is in a closed state. The valve element 9 is mounted to the valve spindle 7. Thus, the valve element 9 is interposed between a closed end (bottom) of the cup 6 and the valve seat 4.

As shown, the cup 6 comprises in its circumferential wall 8 a throttle opening 10a for throttling the fluid flow. The fluid flow is adjustable by moving the cup 6 with respect to the valve seat support 5. Details of the first throttle opening 10a will be discussed in connection with other figures later.

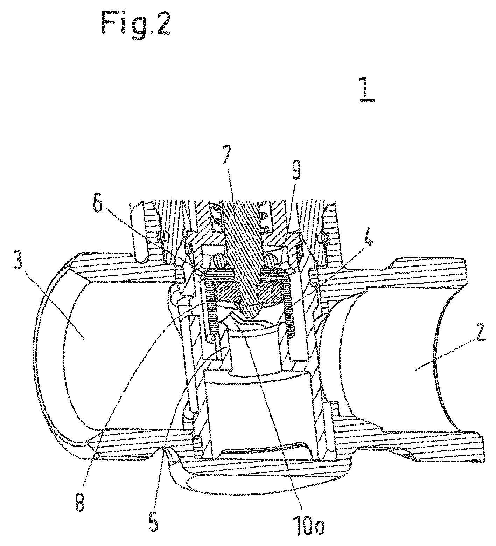

Fig. 2 now shows a perspective view revealing the interaction between the cup 6 and the valve seat support 5.

As can be seen, the circumferential wall 8 of the cup 6 radially surrounds the valve seat support 5 coaxially. Therefore, depending on the translational position of the cup 6, the valve seat support 5 covers more or less area of the first throttle opening 10a. Thus, depending on the translational position of the cup 6, more or less of the fluid flow is allowed to pass through the first throttle opening 10a from the inlet 2 to the outlet 3.

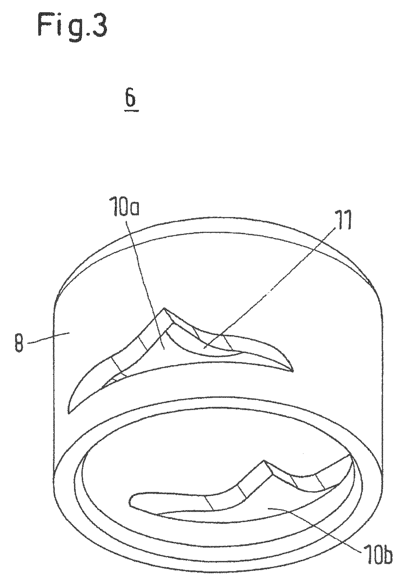

Fig. 3 shows the cup 6 as used in the first embodiment of the invention depicted in Fig. 1 and 2. The cup 6 has two throttle openings 10a, 10b, which are arranged in opposing pairs in the circumferential wall 8. Both throttle openings 10a, 10b have the same shape and the same flow cross section with respect to each other. Both throttle openings 10a, 10b have a shape allowing a linear throttling of the fluid flow. This is due to the fact that both throttle openings 10a, 10b have a circumferential width progressively changing with respect to an axial extension of the circumferential wall 8.

The cup 6 comprises a spindle opening 11 for accommodating the valve spindle 7. Once the valve spindle 7 is inserted into the spindle opening 11 the valve spindle 7 can carry the valve element 9. The valve spindle 7 is sealed into the spindle opening 11 so that the end of the cup 6 accommodating the valve spindle 7 is the closed end in the assembled state of the valve arrangement 1.

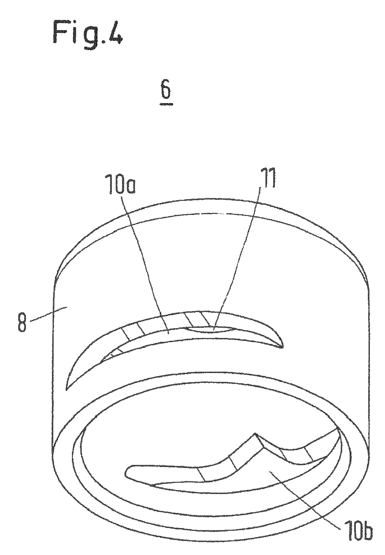

Fig. 4 shows a cup 6 of a second embodiment of the invention. In this embodiment most of the features are the same as in the first embodiment. However, the throttle openings 10a, 10b have different shapes and different flow cross sections with respect to each other. This allows for a good control in the low flow area and a boost in the high flow area. The rear throttle opening 10b therefore has a circumferential width progressively changing with respect to an axial direction of the circumferential wall. The shown combination of throttle openings 10a, 10b thus allows a progressive throttling of the fluid flow.

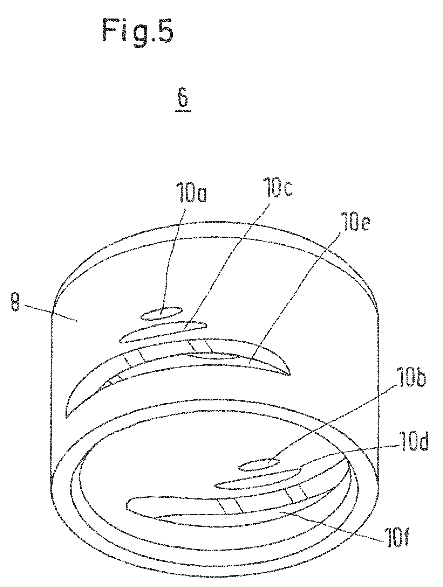

Fig. 5 now shows a cup 6 of a third embodiment of the invention. Most features are the same as in the first and the second embodiment of the invention. However, in this case there are six throttle openings 10a, 10b, 10c, 10d, 10e, 10f, the throttle openings being arranged in opposing pairs. The opposing pairs are arranged serially one after another with respect to an axial extension of the circumferential wall 8. This way a stepwise throttling of the fluid flow is established. In a first step, when the cup 6 moves away from the valve seat 4 in the axial direction, only a small fluid flow can pass through the first throttle opening 10a and the second throttle opening 10b. Once the cup 6 reaches a predetermined translational position, suddenly the fluid flow can also pass through the third throttle opening 10c and the fourth throttle opening 10d. Therefore, the fluid flow through the valve arrangement 1 suddenly increases. Then, when the cup 6 reaches yet another translational position, which is farest away from the valve seat 4, finally the fluid flow can also pass through the fifth throttle opening 10e and the sixth throttle opening 10f. Then the fluid flow reaches a third step which allows for a passage of fluid from the first port 2 to the second port 3 that is larger than the transfer of fluid in the first step and in the second step.

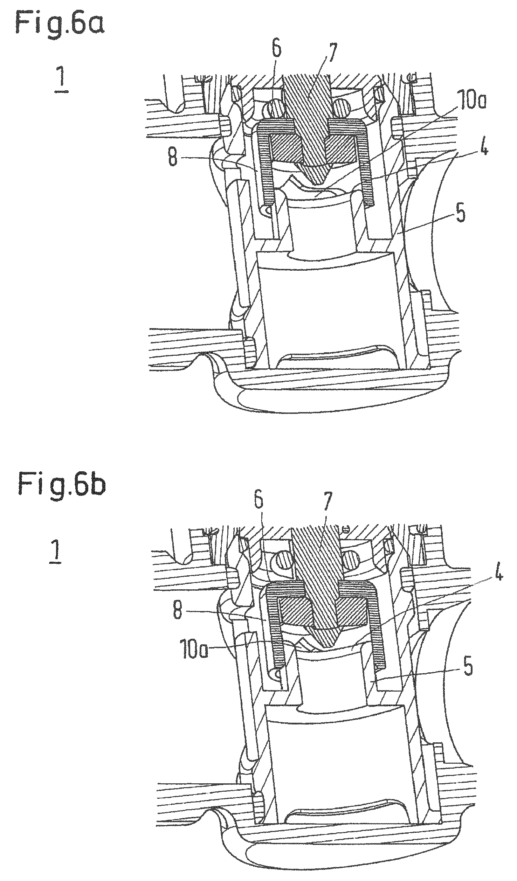

Fig. 6a and 6b show a first translational position of the cup 6 in the first embodiment and a second translational position of the cup 6 in the first embodiment, respectively. As can be seen, in the first position the valve seat support 5 fully uncovers the flow cross section of the first throttle opening 10a. Thus, a maximum fluid flow through the first throttle opening 10a is possible.

In Fig. 6b the valve spindle 7 has moved the valve element 9 and the cup 6 closer towards the valve seat 4 and thus brings the valve arrangement 1 closer to the closed position. Accordingly, the valve seat support 5 covers a part of the first throttle opening 10a and thus the fluid flow through the first throttle opening 10a is reduced. Therefore, the fluid flow in the second translational position of the cup 6 is smaller than in the first translational position of the cup 6.

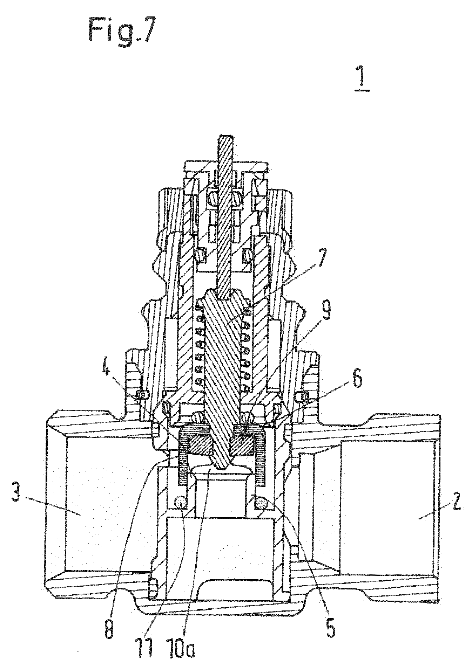

Fig. 7 shows another embodiment of the valve which basically corresponds to the embodiment shown in Fig. 1.

In this embodiment of the valve arrangement 1 additional sealing means 11 are provided between the valve seat support 5 and the cup 6. These sealing means 5 can have the form of an O-ring. The sealing means 11 are used to completely shut-off the valve arrangement, i.e. to completely interrupt a connection between the first port 2 and the second port 3 when the spindle 7 is in the lower most position. In this case the cup 6 comes in contact with the sealing means 11 and presses them against the valve seat support 5.

The same effect can be achieved as well when the valve element 9 contacts the valve seat 4.

In all of the embodiments shown, the cup 6 is made of a plastic material. Therefore, the cup 6 for the valve arrangement 1 can be produced at a low price. This allows to reduce production costs of the valve arrangement 1.

The cup 6 is especially useful in the low flow area, where a prior art or normal constructions have difficulties in precise regulation. In connection with an electronic thermostat (with a built-in step motor) it is very easy to count the steps for the step motor and if the "system" knows the regulation holes shape it can regulate with great precision.

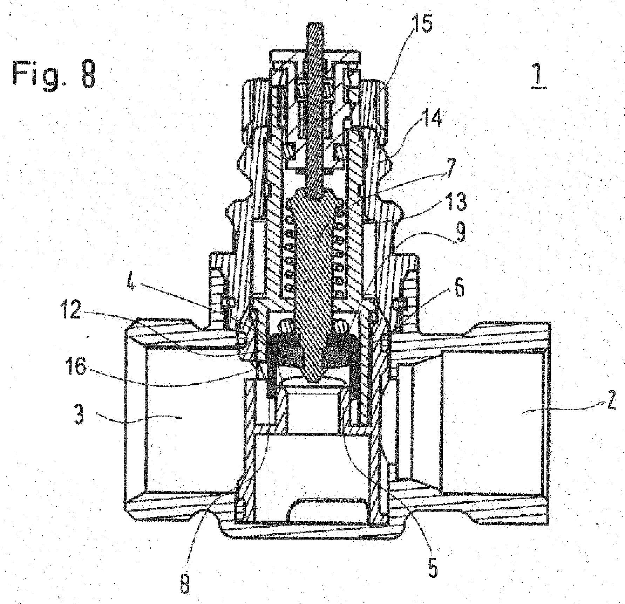

Fig. 8 shows a fifth embodiment of the valve arrangement 1 in which additionally presetting means 12 are provided. The presetting means 12 are made in one piece with a valve top insert 13 extending through a valve top 14 so that it is accessible from the outside. The insert 13 is connected to a ring 15. When ring 15 is rotated, presetting means 12 are rotated as well. Rotation of the presetting means 12 changes the size of a flow area 16.

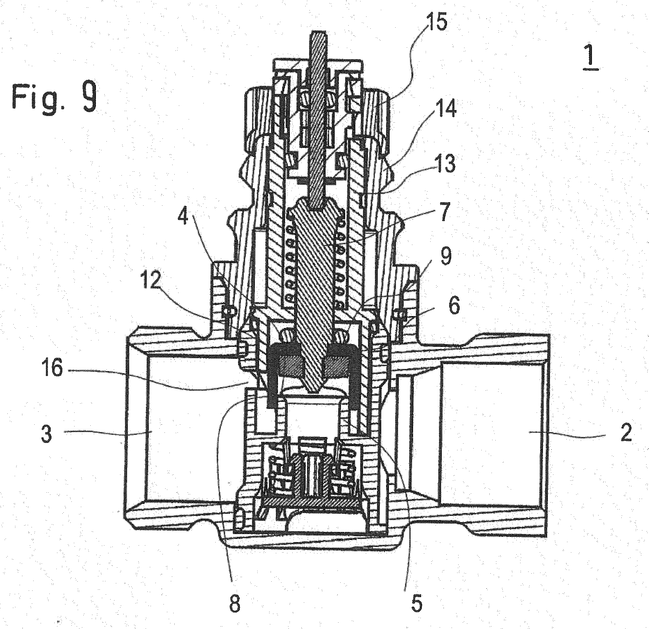

Fig. 9 shows the valve arrangement of Fig. 8 having additionally a dynamic unit 17. The dynamic unit 17 is used to keep constant a pressure drop over the combination of valve seat 4 and valve element 9 or cup 6, respectively.

## Claims

1. A valve arrangement (1) comprising a first port (2), a second port (3), a valve seat (4) being arranged in a flow path between the first port (2) and the second port (3), and a valve seat support (5) supporting the valve seat (4), **characterized in that** the valve arrangement (1) comprises a cup (6), the cup (6) radially surrounding the valve seat support (5) or the valve seat support (5) radially surrounding the cup (6), the cup (6) throttling a fluid flow along the fluid flow path.

2. The valve arrangement according to claim 1, **characterized in that** the cup (6) is adjusted to the form of the valve seat support (5).

3. The valve arrangement according to claim 2, **characterized in that** the valve seat support (5) is of a cylindrical shape and the cup (6) is of a corresponding cylindrical shape.

4. The valve arrangement according to any of the claims 1 to 3, **characterized in that** sealing means (11) are arranged between the valve seat support (5) and the cup (6).

5. The valve arrangement to any of the claims 1 to 4, **characterized in that** the cup (6) houses a valve element (9) cooperating with the valve seat (4).

6. The valve arrangement according to any of the claims 1 to 5, **characterized in that** the cup (6) is moveable together with a valve spindle (7) in order to throttle the fluid flow.

7. The valve arrangement according to any of the claims 1 to 6, **characterized in that** the cup (6) comprises a circumferential wall (8) or the valve seat support (5) comprises a circumferential wall (8), the circumferential wall (8) comprising one or more throttle openings (10a, 10b, 10c, 10d, 10e, 10f) for throttling the fluid flow, the fluid flow being adjustable by moving the cup (6) with respect to the valve seat support (5).

8. The valve arrangement according to claims 7, **characterized in that** two of the throttle openings (10a, 10b, 10c, 10d, 10e, 10f) each are arranged in opposing pairs.

9. The valve arrangement according to claim 7 or claim 8, **characterized in that** the throttle openings (10a, 10b, 10c, 10d, 10e, 10f) have different shapes.

10. The valve arrangement according to any of the claims 7 to 9, **characterized in that** at least one throttle opening (10a, 10b, 10c, 10d, 10e, 10f) has a shape allowing a linear throttling of the fluid flow.

11. The valve arrangement according to any of the claims 7 to 10, **characterized in that** at least one of the throttle openings (10a, 10b, 10c, 10d, 10e, 10f) has a shape allowing a progressive and/or degressive throttling of the fluid flow.

12. The valve arrangement according to any of the claims 7 to 11, **characterized in that** at least one of the throttle openings (10a, 10b, 10c, 10d, 10e, 10f) has a circumferential width progressively changing with respect to an axial extension of the circumferential wall (8).

13. The valve arrangement according to any of the claims 7 to 12, **characterized in that** there are at least two throttle openings (10a, 10b, 10c, 10d, 10e, 10f), the throttle openings (10a, 10b, 10c, 10d, 10e, 10f) having different flow cross sections with respect to each other.

14. The valve arrangement according to any of the claims 7 to 13, **characterized in that** there are at least two throttle openings (10a, 10b, 10c, 10d, 10e, 10f), the throttle openings (10a, 10b, 10c, 10d, 10e, 10f) being arranged serially one after another with respect to an axial extension of the circumferential wall (8).

15. The valve arrangement according to any of the claims 1 to 14, **characterized in that** the cup (6) comprises a plastic material.
